# EUROPÄISCHE PATENTSCHRIFT

(11) **EP 2 103 853 B1**
(45) Veröffentlichungstag und Bekanntmachung des Hinweises auf die Patenterteilung: **23.10.2013**
(21) Anmeldenummer: 08105944.6
(22) Anmeldetag: 05.12.2008
(51) Int. Cl.: F16K 17/04, F02M 55/00, F02M 69/54, F02M 37/00

(54) **Druckhalteventil**
Pressure maintenance valve
Soupape de maintien de la pression

(30) Priorität: 18.03.2008 DE 102008000739
(43) Veröffentlichungstag der Anmeldung: 23.09.2009
(73) Patentinhaber: Robert Bosch GmbH, 70442 Stuttgart (DE)
(72) Erfinder: Becker, Oliver, 69198 Schriessheim (DE); Walther, Jochen, 70188 Stuttgart (DE); Heinecke, Ralf, 71686 Remseck (DE)

(56) Entgegenhaltungen:
- WO-A1-2009/083434
- DE-A1- 19 541 086
- GB-A- 2 268 225

## Beschreibung

### Stand der Technik

Aus der DE 196 04 889 A1 ein Druckbegrenzungsventil bekannt. Dessen Einzelbauteile sind in eine sacklochartige Bohrung eingesetzt, die sich preisgünstig im Gehäuse von druckmittelführenden Aggregaten ausbilden lässt. Im Bereich der Öffnungen einer Bohrung befindet sich ein besonders ausgebildeter Sitzkörper. Der Sitzkörper kann in einem einzigen automatisierten Arbeitsgang in die Bohrung eingepresst und mit ihr formschlüssig verbunden werden. Gleichzeitig mit dem Einpressvorgang kann eine individuelle Einstellung der Auslösedruckschwelle des Druckbegrenzungsventils erfolgen. Der im Sitzkörper ausgebildete Zulauf ist gegenüber dem Ablauf so angeordnet, dass eine vollständige Durchströmung des Druckbegrenzungsventils gewährleistet ist. Dadurch lassen sich Axial beziehungsweise Radialschwingungen des Ventilkörpers, der den Druckmittelstrom steuert, vermindern und Betriebsstörungen reduzieren.

DE 195 41 086 A1 offenbart ein Rückschlagventil mit integriertem Rückströmventil zum beidseitigen Druckausgleich im Kraftstoffzulauf.

WO 2009/083434 A1 offenbart ein Rückschlagventil im Kraftstoffrücklauf mit einem zweiten, gleichgerichteten Strömungspfad für den Fall, das der erste, mit Filter versehene Strömungspfad aufgrund Filterblockade verstopfen sollte.

GB 2 268 225 A offenbart ein Rückschlagventil mit integriertem Rückströmventil zum beidseitigen Druckausgleich im Kraftstoffzulauf.

Für bestimmte Konzepte von Kraftstoffinjektoren ist ein bestimmtes Druckniveau in der Rücklaufleitung zur Aufrechterhaltung der Funktion der Kraftstoffinjektoren notwendig. Zu diesem Zwecke werden unter anderem Druckhalteventile eingesetzt, die den Druck in die Rücklaufleitung durch die fortgesetzte Einbringung von Kraftstoff durch die Steuermenge bis zu einem gewissen Wert ansteigen lassen. Ist ein Grenzwert des Druckes in die Rücklaufleitung erreicht (Öffnungsdruck des Druckhalteventils), öffnet das Druckhalteventil so lange, bis der Öffnungsdruck in der Rücklaufleitung wieder unterschritten wird. Üblicherweise sind Druckhalteventile als Kugelventile ausgeführt.

Über die Steuermenge gelangt verdichteter heißer Kraftstoff in die Rücklaufleitung und erwärmt den dort bereits vorhandenen Kraftstoff sowie die Rücklaufleitung. In Betriebsphasen des Motors, in denen keine Einspritzung erfolgt, so zum Beispiel im Schubbetrieb, gelangt auch kein weiterer Kraftstoff in die Rücklaufleitung. Der Kraftstoff in der Rücklaufleitung kühlt sich ab, was zu einem deutlichen Druckverlust in der Rücklaufleitung führt, obwohl das Druckhalteventil geschlossen ist. Weiterhin können Kleinstleckagen am Druckhalteventil zu einem Druckabbau in der Rücklaufleitung führen.

### Offenbarung der Erfindung

Durch die erfindungsgemäß vorgeschlagene Lösung kann ein zusätzliches Bauteil in Gestalt eines separat in die Rücklaufleitung eines Kraftstoffeinspritzsystems zu integrierenden Ausgleichsvolumens eingespart werden, für welches ansonsten Bauraum im Motorraum notwendig würde beziehungsweise eine Konstruktionsanpassung, d.h. eine Modifikation im Rücklaufteil des Kraftstoffeinspritzsystems erforderlich wäre.

Das erfindungsgemäß vorgeschlagene Druckhalteventil umfasst zur Darstellung einer Volumenausgleichsfunktion einen durch ein Federelement belasteten Kolben. Dieser wird innerhalb eines Gehäuses im Ausgangszustand gegen einen Anschlag gedrückt. Das Gehäuse hat an einer Seite einen Anschluss zu den mit Kraftstoff zu versorgenden Kraftstoffinjektoren sowie auf der gegenüberliegenden Seite einen Anschluss zum Kraftstoffreservoir. Die Trennung in Bezug auf den Druck beider Anschlüsse erfolgt über ein Dichtelement am Umfang des Kolbens. Während Betriebsphasen mit Einspritzung beziehungsweise dadurch auftretender Rücklaufmenge baut sich der Druck in der Rücklaufleitung auf, und der Kolben wird gegen die Federkraft in eine erste Richtung verschoben. Hat der Kolben eine bestimmte Wegstrecke überschritten, werden beide Anschlüsse des Gehäuses hydraulisch über eine Nut verbunden, und es erfolgt ein sich auf der Injektorseite des Gehäuses einstellender Druckabbau. Ist der Druck auf der Injektorseite des Gehäuses so weit abgesunken, dass die Federkraft eine Kolbenverschiebung in die entgegengesetzte Richtung ermöglicht, werden beide Anschlüsse durch das Dichtelement wieder voneinander getrennt, und es findet ein erneuter Druckaufbau statt. Im Mittel stellt sich durch die erfindungsgemäß vorgeschlagene Lösung ein Maximaldruck auf der Injektorseite ein, der vor allem von der Kolbenquerschnittsfläche und der Federkraft abhängig ist. Dieser maximale Druck entspricht dem Öffnungsdruck des Druckhalteventils.

Während Schubphasen der Verbrennungskraftmaschine kommt es zu einem Druckabbau in dem Teil der Rücklaufleitung, die zwischen den Kraftstoffinjektoren und dem erfindungsgemäß vorgeschlagenen Druckhalteventil liegt. Dadurch wird der Kolben durch die Feder weiter in die erste Richtung gedrückt, wodurch dem Druckabbau Rücklaufleitung entgegengewirkt wird. Diese Ausgleichswirkung ist beendet, sobald der Kolben den Anschlag erreicht.

Des Weiteren ist in das erfindungsgemäß vorgeschlagene Druckhalteventil eine Wiederbefüllfunktion integriert. Bei einem auf der Tankseite sich einstellenden höheren Druck im Vergleich zum Druck auf der Injektorseite, wird das Dichtelement über Querbohrungen im Kolben gegen das Federelement aufgedrückt, und es kommt somit zu einer Strömung des Kraftstoffs auf die Seite des Gehäuses, an dem der Anschluss zu den mit Kraftstoff zu versorgenden Kraftstoffinjektoren liegt.

### Kurze Beschreibung der Zeichnungen

Anhand der Zeichnung wird die Erfindung nachstehend eingehender beschrieben.

Es zeigen:
- Figuren 1.1, 1.2 und 1.3: eine erste Ausführungsvariante des erfindungsgemäß vorgeschlagenen Druckhalteventils,
- Figuren 2.1, 2.2 und 2.3: eine weitere, zweite Ausführungsform des erfindungsgemäß vorgeschlagenen Druckhaltesystems,
- Figuren 3.1, 3.2 und 3.3: eine weitere, dritte Ausführungsvariante des erfindungsgemäß vorgeschlagenen Druckhalteventils mit Volumenausgleichsfunktion und integriertem Kugelventil zur Maximaldruckbegrenzung und
- Figur 4: die Gegenüberstellung vom Druckabbau in einem Druckhalteventil mit und ohne Ausgleichsvolumen.

### Ausführungsformen

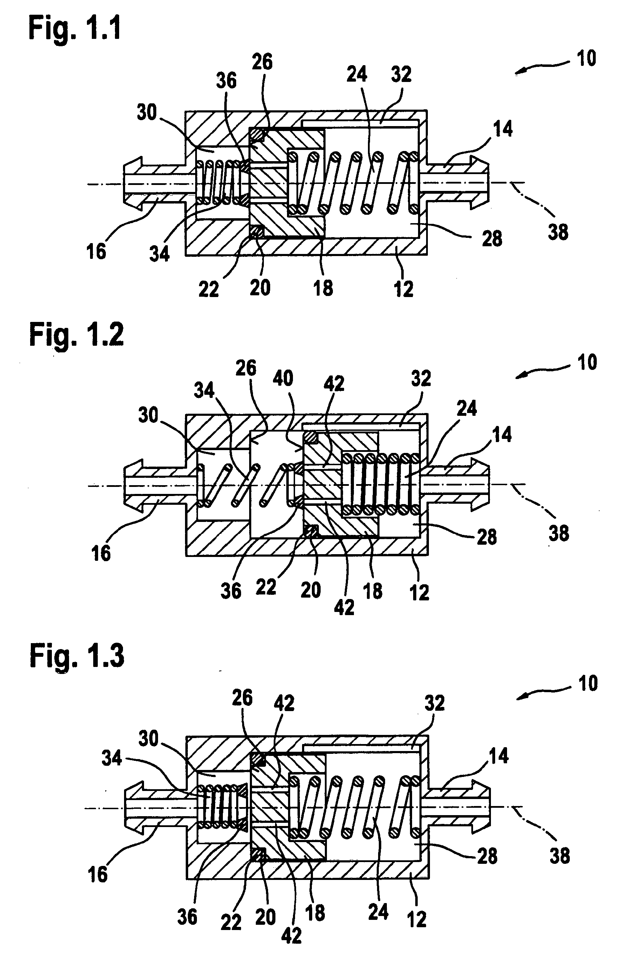

Den Figuren 1.1, 1.2 und 1.3 ist eine erste Ausführungsvariante des erfindungsgemäß vorgeschlagenen Druckhalteventils zu entnehmen.

Figur 1.1 zeigt ein Druckhalteventil 10, welches ein Gehäuse 12 umfasst. Am Gehäuse 12 befindet sich ein das Druckhalteventil 10 mit einem Kraftstoffreservoir verbindender Tankanschluss 14; mit Bezugszeichen 16 ist ein injektorseitiger Anschluss bezeichnet, über den das Druckhalteventil 10 innerhalb des Rücklauftraktes eines Kraftstoffeinspritzsystems 10 mit den Kraftstoffinjektoren verbunden ist. Bei den Kraftstoffinjektoren - die in der Darstellung gemäß der Figuren 1.1 bis 1.3 nicht dargestellt sind - entsteht bei Betätigung eines in der Regel nadelförmig ausgebildeten Einspritzventilgliedes durch Druckentlastung eines Steuerraumes ein Absteuervolumen, die Steuermenge. Die Steuermenge, die von den Kraftstoffinjektoren abgesteuert wird, beaufschlagt einen zweiten hydraulischen Raum 30, der im Gehäuse 12 des Druckhalteventils 10 ausgebildet ist.

Wie der Darstellung gemäß der Figur 1.1 entnehmbar ist, werden ein erster hydraulischer Raum 28 und der zweite hydraulische Raum 30 durch einen Kolben 18 voneinander getrennt. Der Kolben 18 weist an einer Kolbenstirnseite 40 eine Ringnut 20 auf. In der Ringnut 20 befindet sich ein ebenfalls bevorzugt ringförmig ausgebildetes Dichtelement 22, über welches der erste hydraulische Raum 28 tankseitig und der zweite hydraulische Raum 30 injektorseitig voneinander getrennt sind.

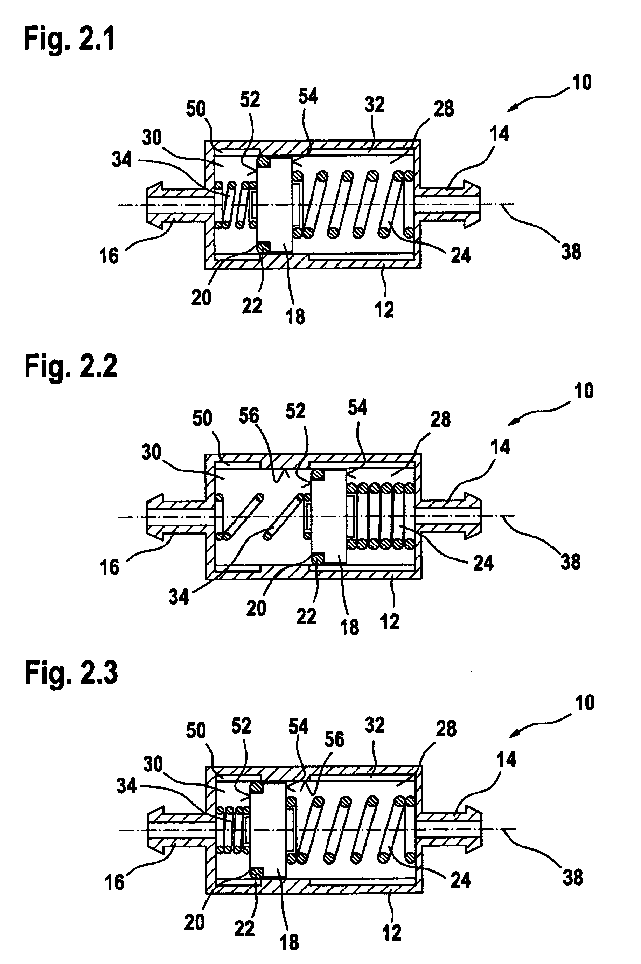

Wie der Darstellung gemäß Figur 1.1 zu entnehmen ist, verläuft in einer Innenmantelfläche des Gehäuses 12 des Druckhalteventils 10 eine zum Beispiel nutförmig ausgebildete hydraulische Verbindung 32. Wie der Figur 1.1 des Weiteren entnommen werden kann, ist der Kolben 18 durch eine Kolbenfeder 24, die im ersten hydraulischen Raum 28 aufgenommen ist, beaufschlagt; ein ringförmig ausgebildetes Dichtelement 36, welches Kanäle 42 (vergleiche Darstellung gemäß Figur 2) des Kolbens 18 öffnet oder verschließt, ist durch eine Anstellfeder 34 beaufschlagt. Die Anstellfeder 34 erstreckt sich durch den zweiten hydraulischen Raum 30, in dem ebenfalls das an die Kolbenstirnseite 40 angestellte Dichtelement 36 zum Öffnen oder Freigeben der Kanäle 42 aufgenommen ist.

Das in der Darstellung gemäß der Figuren 1.1 bis 1.3 dargestellte erfindungsgemäß vorgeschlagene Druckhalteventil umfasst eine Volumenausgleichsfunktion. Hauptelement des in Figur 10 dargestellten Druckhalteelementes 10 ist der mit der Kolbenfeder 24 beaufschlagte Kolben 18. Der Kolben 18 ist im Ausgangszustand durch die Kolbenfeder 24 in einen ersten Anschlag 26, der in der Innenseite des Gehäuses 12 ausgebildet ist, angestellt. Steigt der Druck im zweiten hydraulischen Raum durch Einströmen von Steuermenge über den Injektoranschluss 16 bei Betriebsphasen mit Einspritzung, baut sich im zweiten hydraulischen Raum 30 durch die von den Kraftstoffinjektoren jeweils abgesteuerte Steuermenge ein Druck auf. Der Kolben 18 wird entgegen der Wirkung der Kolbenfeder 24 in den ersten hydraulischen Raum 28 verschoben. Hat der Kolbenweg in Richtung in den ersten hydraulischen Raum 28 eine in einer Mantelfläche der Innenseite des Gehäuses 12 ausgebildete hydraulische Verbindung 32 freigegeben, so erfolgt ein Druckausgleich vom zweiten hydraulischen Raum 30 injektorseitig in den ersten hydraulischen Raum 28 tankseitig. Damit sind der Tankanschluss 14 und der Injektoranschluss 16 über die hydraulische Verbindung 32 miteinander verbunden.

Ist der Druck auf der Injektorseite, d.h. im zweiten hydraulischen Raum 30, so weit abgesunken, dass die Federkraft der Kolbenfeder 24 eine Kolbenverschiebung des ersten Kolbens 18 in Richtung an den ersten Anschlag 26 ermöglicht, werden die beiden Anschlüsse, d.h. der Tankanschluss 14 und der Injektoranschluss 16, wieder durch das an der Mantelfläche des Kolbens 18 aufgenommene Dichtelement 22 voneinander getrennt. Es findet erneut ein Druckaufbau im zweiten hydraulischen Raum 30 - injektorseitig - statt. Im Mittel wird sich ein maximaler Druck im zweiten hydraulischen Raum 30 einstellen, der im Wesentlichen von der Querschnittsfläche des durch die Kolbenfeder 24 beaufschlagten Kolbens 18 und von der Federkraft, die durch die Kolbenfeder 24 aufgebracht wird, abhängt. Dieser maximale Druck entspricht dem Öffnungsdruck des erfindungsgemäß vorgeschlagenen Druckhalteventils 10.

Während Schubphasen, d.h. zum Beispiel beim Gas wegnehmen oder bei der Passage von längeren Gefälle-Strecken, kommt es zu einem Druckabbau innerhalb der Rücklaufleitung zwischen den Kraftstoffinjektoren, und innerhalb des zweiten hydraulischen Raums 30. Hierdurch wird der Kolben 18 durch die Kolbenfeder 24 weiter in Richtung auf den ersten Anschlag 26 geschoben, wodurch dem Druckabbau im zweiten hydraulischen Raum 30 entgegengewirkt wird. Diese Ausgleichswirkung ist beendet, sobald der über die Kolbenfeder 24 beaufschlagte Kolben 18 den ersten Anschlag 26 des Gehäuses 12 erreicht hat und demzufolge nicht weiter in Richtung auf den zweiten hydraulischen Raum 30 verfahrbar ist.

Figur 1.2 ist zu entnehmen, dass der über die Rückstellfeder 24 beaufschlagte Kolben mindestens einen Kanal 42 aufweist. Über den mindestens einen Kanal 42 im Kolben 18 sind der hydraulische Raum 28 und der zweite hydraulische Raum 30 abgesehen von der hydraulischen Verbindung 32 entsprechend der Position eines ringförmig ausgebildeten Dichtelementes 36 miteinander verbunden. Das in der Darstellung gemäß Figur 1.2 zum Beispiel ringförmig ausgebildete Dichtelement 36 ist durch die in Figur 1.1 im komprimierten Zustand dargestellte Anstellfeder 34 beaufschlagt.

Wie Figur 1.3 entnommen werden kann, ist in das erfindungsgemäß vorgeschlagene Druckhalteventil 10 in seiner ersten Ausführungsvariante eine Rückbefüllfunktion des zweiten hydraulischen Raums 30 in Gestalt der den Kolben 18 durchziehenden Kanäle 42 integriert. Bei einem im ersten hydraulischen Raum 28 herrschenden höheren Druck im Vergleich zu dem Druck, der im zweiten hydraulischen Raum 30 injektorseitig herrscht, erfolgt eine Freigabe der den Kolben 18 durchziehenden Kanäle 42 durch den im ersten hydraulischen Raum 28 herrschenden Druck, d.h. ein Überströmen von Kraftstoff von diesem in den zweiten hydraulischen Raum 30. Die Bohrungen 42 werden entgegen der Wirkung der Anstellfeder 34 aufgedrückt. Wie in Figur 1.3 dargestellt, strömt der Kraftstoff vom ersten hydraulischen Raum 28 in den zweiten hydraulischen Raum 30 innerhalb des Gehäuses 12 des Druckhalteventils 10 über.

In einer weiteren Ausführungsvariante, die in den Figuren 2.1 bis 2.3 dargestellt ist, ist eine Rückbefüllfunktion über eine im Gehäuse 12 ausgebildete Nut gegeben.

Figur 2.1 zeigt, dass im Vergleich zu in den Figuren 1.1 bis 1.3 dargestellten ersten Ausführungsformen des erfindungsgemäß vorgeschlagenen Druckhalteventils 10 der Kolben 18 in der zweiten Ausführungsvariante einfacher ausgestaltet ist. Der Kolben 18 umfasst eine erste Stirnseite 52 sowie eine zweite Stirnseite 54, die im Wesentlichen plan ausgebildet sind. Im Vergleich zur in den Figuren 1.1, 1.2 und 1.3 dargestellten ersten Ausführungsform des erfindungsgemäß vorgeschlagenen Druckhalteventils 10 sind die Kanäle 42 entfallen, ferner die topfförmige Ausnehmung, in die die Kolbenfeder 24 gemäß der Figuren 1.1, 1.2 und 1.3, die den ersten hydraulischen Raum 28 durchzieht, eingelassen ist.

Wie die Figuren 2.1, 2.2 und 2.3 zeigen, verläuft in einer Innenmantelfläche 56 des Gehäuses 12 neben der ersten hydraulischen Verbindung 32, die als Nut beschaffen sein kann, eine weitere hydraulische Verbindung 50, die der Rückbefüllung des zweiten hydraulischen Raums 30 bei entsprechender axialer Stellung des Kolbens 18 dient. Wie die Figuren 2.1, 2.2 und 2.3 zeigen, ist im Gehäuse 12 des erfindungsgemäß vorgeschlagenen Druckhalteventils 10 in der zweiten Ausführungsform der erste Anschlag 26 entfallen. Der Kolben 18 ist gewissermaßen fliegend in Bezug auf seine Stirnseiten 52, 54 durch die Kolbenfeder 24, die den ersten hydraulischen Raum 28 durchzieht, und durch die Anstellfeder 34, die sich durch den zweiten hydraulischen Raum 30 erstreckt, eingespannt. Bei einem Druckanstieg im zweiten hydraulischen Raum 30 verfährt der Kolben 18 mit am Umfang in einer Ringnut 20 aufgenommenem Dichtelement 22 in den ersten hydraulischen Raum 28, wie in Figur 2.2 dargestellt. Dies entspricht der in Figur 1.2 dargestellten Position des Kolbens 18 im ersten Ausführungsbeispiel. Sobald der Kolben 18 beziehungsweise das an dessen Ringfläche aufgenommene Dichtelement 22 die Kante der hydraulischen Verbindung 32 an der Innenmantelfläche 56 des Gehäuses 12 freigibt, erfolgt ein Druckausgleich vom zweiten hydraulischen Raum 30 in den ersten hydraulischen Raum 28 des Gehäuses 12. Umgekehrt erfolgt eine Wiederbefüllung des zweiten hydraulischen Raumes 30 bei starkem Druckabfall dort und bei höherem Druck im ersten hydraulischen Raum 28 durch den Kolben 18, der von der Kolbenfeder 24 beaufschlagt ist. Der Kolben 18 wird so weit in den zweiten hydraulischen Raum 30 eingefahren, dass die hydraulische Verbindung 50 zwischen dem ersten hydraulischen Raum 28 und dem zweiten hydraulischen Raum 30, der in diesem Falle ein geringes Volumen aufweist, bei komprimierter Anstellfeder 34 über die hydraulische Verbindung 50 an der Innenmantelfläche 56 des Gehäuses 12 erfolgt.

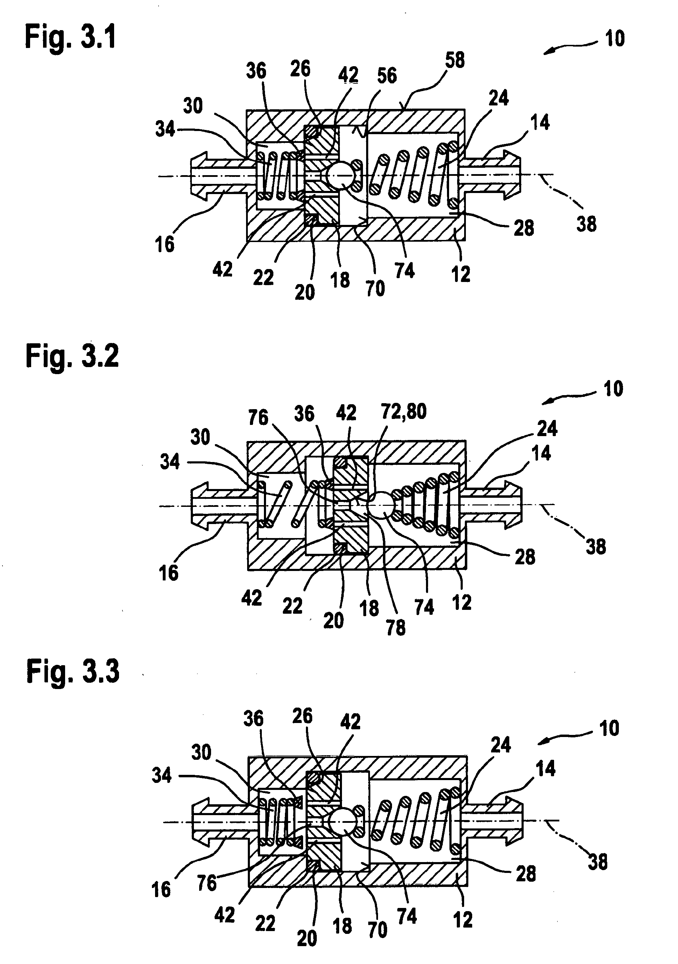

In den Figuren 3.1, 3.2 und 3.3 ist eine weitere, dritte Ausführungsform des erfindungsgemäß vorgeschlagenen Druckhalteventils mit Volumenausgleichsfunktion und integriertem Kugelventil zur Maximaldruckbegrenzung dargestellt.

Figur 3.1 zeigt, dass der Kolben 18 ähnlich einfach ausgebildet ist wie im zweiten Ausführungsbeispiel, gemäß der Figuren 2.1, 2.2 und 2.3. Der im dritten Ausführungsbeispiel gemäß der Figuren 3.1, 3.2 und 3.3 dargestellte Kolben 18 umfasst die erste Stirnseite 52 und die zweite Stirnseite 54, die plan ausgebildet sind. Des Weiteren ist der Kolben 18 von mindestens einem Kanal 42 durchzogen, der über das an die erste Stirnseite 52 angestellte, hier ringförmig ausgebildete Dichtelement 36 verschlossen ist, das wiederum von der Anstellfeder 34 beaufschlagt ist. Zusätzlich zu dem mindestens einen Kanal 42 ist die Fläche des federbeaufschlagten Kolbens 18 von einem zentralen Kanal 76 durchzogen. Der zentrale Kanal 76 erstreckt sich im Wesentlichen symmetrisch zur Gehäuseachse 38 des Gehäuses 12 des Druckhalteventils 10. Der zentrale Kanal 76 umfasst einen Trichter 78, in dem ein Kegelsitz 80 ausgebildet ist. Der Kegelsitz 80 wird über ein in der Darstellung gemäß der Figuren 3.1, 3.2 und 3.3 kugelförmig ausgebildetes Schließelement 74, welches seinerseits durch die Kolbenfeder 24 beaufschlagt ist, verschlossen. Der Ventilsitz 72 ist in der Ausführungsform des Druckhalteventils 10 gemäß der Figuren 3.1, 3.2 und 3.3 als Kegelsitz 80 ausgeführt.

Wie aus Figur 3.1 hervorgeht, ist der Kolben 18 über die Wirkung der Kolbenfeder 24 in den ersten Anschlag 26 gestellt. In der in Figur 3.1 dargestellten axialen Stellung des Kolbens 18 werden der zweite hydraulische Raum 30 und der erste hydraulische Raum 28 voneinander getrennt. Die Kanäle 42, die den Kolben 18 parallel zur Gehäuseachse 38 durchziehen, sind durch das durch die Anstellfeder 34 beaufschlagte Dichtelement 36 verschlossen. Des Weiteren ist das in den Darstellungen gemäß der Figuren 3.1, 3.2 und 3.3 dargestellte, kugelförmig ausgebildete Schließelement 74 durch die Kolbenfeder 24 in den Ventilsitz 72, hier ausgebildet als Kegelsitz 80, gestellt, der demzufolge verschlossen ist. Bei Betrieb der Kraftstoffinjektoren erfolgt nun ausgehend von der in Figur 3.1 dargestellten Stellung des Kolbens 18 ein Druckaufbau durch Einströmen von Steuermenge im zweiten hydraulischen Raum 30 über den Injektoranschluss 16. Der mindestens eine Kanal 42, der den Kolben 18 durchzieht, ist durch das über die Anstellfeder 34 beaufschlagte Dichtelement 36 nach wie vor verschlossen. Entsprechend des Druckaufbaus, der sich im zweiten hydraulischen Raum 30 einstellt, wird der Kolben 18 entgegen der Wirkung der Kolbenfeder 24 in Richtung auf den zweiten Anschlag 70 an der Innenseite des Gehäuses 12 verschoben. Der maximale Druck in der am Injektoranschluss 16 des Gehäuses 12 des Druckhalteventils 10 angeschlossenen Rücklaufleitung ist dann erreicht, wenn der Kolben 18 an den zweiten Anschlag 70 angelaufen ist und das Schließelement 74 - hier kugelförmig ausgebildet - durch den im zweiten hydraulischen Raum 30 und dem Zentralkanal 76 durch das Schließelement 74 wirkenden Druck entgegen der Wirkung der Kolbenfeder 24 öffnet. Dies bedeutet, dass ein Druckausgleich über den geöffneten Ventilsitz 72, hier ausgebildet als Kegelsitz 80, vom zweiten hydraulischen Raum 30 in den ersten hydraulischen Raum 28 des Gehäuses 12 des Druckhalteventils 10 erfolgt. Diese Konfiguration ist in der Darstellung gemäß der Figur 3.2 angedeutet.

In dieser Position sind der erste hydraulische Raum 28 und der zweite hydraulische Raum 30 über den zentralen Kanal 76, dessen Ventilsitz 72 aufgrund des im zweiten hydraulischen Raum 30 herrschenden Druckes geöffnet ist, verbunden, während der mindestens eine Kanal 42, der den Kolben 18 durchzieht, nach wie vor durch das hier ringförmig ausgebildete Schließelement beaufschlagt durch die Anstellfeder 34 geschlossen ist.

Der Darstellung gemäß Figur 3.3 ist der Zustand des Druckhalteventils 10 dargestellt, in dem der im ersten hydraulischen Raum 28 herrschende tankseitige Druck den im zweiten hydraulischen Raum 30 herrschenden injektorseitigen Druck übersteigt. Der zentrale Kanal 76 ist durch das hier kugelförmig ausgebildete Schließelement 74 verschlossen, der Kolben vom zweiten Anschlag 70 in den ersten Anschlag 26 gestellt. Aufgrund des höheren Druckes im ersten hydraulischen Raum 28, der in dem mindestens einen Kanal 42, der den Kolben 18 durchzieht, ansteht, wird das hier zum Beispiel ringförmig ausgebildete Dichtelement 36 entgegen der Wirkung der Anstellfeder 34 von der ersten Stirnseite 52 des Kolbens 18 abgestellt und Kraftstoff strömt vom ersten hydraulischen Raum 28 über den mindestens einen Kanal 42 in den zweiten hydraulischen Raum 30 über. Dadurch erfolgt ein Druckausgleich vom ersten hydraulischen Raum 28 in den zweiten hydraulischen Raum 30 bei geschlossenem Ventilsitz 72, hier ausgebildet als Kegelsitz 80 und verschlossen durch das hier kugelförmig ausgebildetes Schließelement 74.

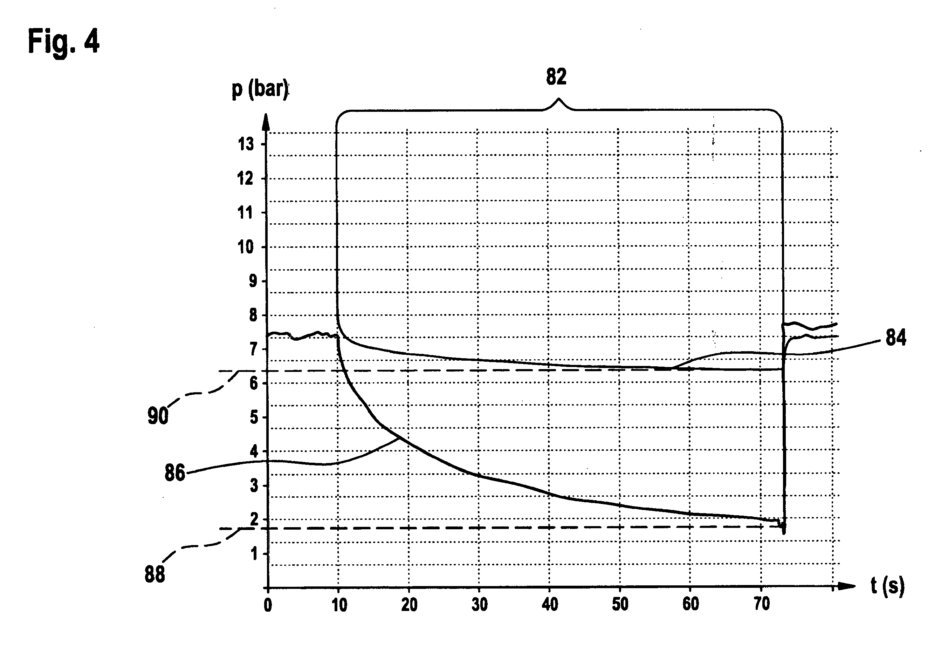

In der Darstellung gemäß Figur 4 sind Druckverläufe von Druckhalteventilen bei Schubbetriebsphasen einer Verbrennungskraftmaschine gegenübergestellt.

Die Dauer der Schubbetriebsphase ist durch Bezugszeichen 82 dargestellt. Diese Schubbetriebsphase 82 erstreckt sich zum Beispiel über einen Zeitraum von 60 Sekunden. Gemäß des Kurvenverlaufes 86 stellt sich während der Schubbetriebsphase 82 in einem Druckhalteventil ohne Volumenausgleichsfunktion ein Druckabfall von einem Rücklaufdruck in der Größenordnung von etwa 8 bar, ein Druckabfall bis auf etwa 2 bar ein. Dies ist durch den Druckverlauf 86 gekennzeichnet. Das Minimum, welches sich nach Ende der Schubbetriebsphase 82 im Druckhalteventil ohne Druckausgleichsfunktion einstellt, liegt in der Größenordnung von etwa 2 bar beziehungsweise geringfügig darunter.

Wird ein erfindungsgemäß vorgeschlagenes Druckhalteventil 10 mit Volumenausgleichsfunktion eingesetzt, so kann der Druckabfall aufgrund der Volumenausgleichsfunktion des erfindungsgemäß vorgeschlagenen Druckhalteventils 10 - bezogen auf einen Ausgangsdruck in der Größenordnung von 8 bar - auf Drücke oberhalb von 6 bar begrenzt werden, d.h. es stellt sich ein zumindest um den Faktor 3 verbesserter Druckverlust, d.h. ein erheblich geringerer Druckverlust im erfindungsgemäß vorgeschlagenen Druckhalteventil 10 ein. Die Verringerung des Druckverlustes während Schubbetriebsphasen von Verbrennungskraftmaschinen geht einher mit dem Vorteil, dass das erfindungsgemäß vorgeschlagene Druckhaltventil 10 die Volumenausgleichsfunktion in das Gehäuse 12 integriert verwirklicht, ohne dass zusätzliche Bauteile oder Modifikationen im Kraftstoffeinspritzsystem der mit Kraftstoff zu versorgenden Verbrennungskraftmaschine, insbesondere im Rücklaufteil desselben, erforderlich wären.

## Patentansprüche

1. Ventil (10), als Druckhalteventil im Rücklaufteil eines Kraftstoffeinspritzsystems ausgebildet mit einem Gehäuse (12), welches einen Tankanschluss (14) und einen Injektoranschluss (16) aufweist sowie einen ersten hydraulischen Raum (28) und einen zweiten hydraulischen Raum (30) umfasst, **dadurch gekennzeichnet, dass** innerhalb des Gehäuses (12) der erste hydraulische Raum (28) und der zweite hydraulische Raum (30) durch genau einen federbelasteten Kolben (18), dessen Mantelfläche eine Ringnut (20) umfasst, in die ein Dichtelement (22) eingelassen ist, hydraulisch voneinander getrennt sind, wobei eine Anstellfeder (34) sich durch den zweiten hydraulischen Raum (30) erstreckt und eine Kolbenfeder (24) im ersten hydraulischen Raum (28) aufgenommen ist.

2. Ventil (10) gemäß Anspruch 1, **dadurch gekennzeichnet, dass** der erste hydraulische Raum (28) über den Injektoranschluss (16) mit Rücklaufmenge (abgesteuerter Menge) der Kraftstoffinjektoren beaufschlagt ist.

3. Ventil (10) gemäß Anspruch 1, **dadurch gekennzeichnet, dass** der federbelastete Kolben (18) über ein federbelastetes, ringförmiges Schließelement (36) zu öffnende oder zu verschließende Kanäle (42) aufweist.

4. Ventil (10) gemäß Anspruch 1, **dadurch gekennzeichnet, dass** der federbelastete Kolben (18) einen Zentralkanal (76) aufweist, der mittels eines weiteren, im ersten hydraulischen Raum (28) angeordneten federbelasteten Schließelementes (74) zu öffnen oder zu verschließen ist.

5. Ventil (10) gemäß Anspruch 1, **dadurch gekennzeichnet, dass** bei Überschreiten eines Druckniveaus im zweiten hydraulischen Raum (30) der Kolben (18) eine hydraulische Verbindung (32), die in den ersten hydraulischen Raum (28) mündet, freigibt und ein Druckausgleich zwischen den hydraulischen Räumen (28, 30) erfolgt.

6. Ventil (10) gemäß Anspruch 5, **dadurch gekennzeichnet, dass** bei Druckabbau im zweiten hydraulischen Raum (30) der Kolben (18) mit Dichtelement (22) die hydraulische Verbindung (32) verschließt und den ersten hydraulischen Raum (28) vom zweiten hydraulischen Raum (30) trennt.

7. Ventil (10) gemäß Anspruch 1, **dadurch gekennzeichnet, dass** eine Rückbefüllung des zweiten hydraulischen Raumes (30) über im Kolben (18) ausgeführte Kanäle (42) gegen die Wirkung eines mit einer Anstellfeder (34) beaufschlagten Dichtelementes (36) erfolgt.

8. Ventil (10) gemäß Anspruch 1, **dadurch gekennzeichnet, dass** eine Wiederbefüllung des zweiten hydraulischen Raumes (30) über an einer Innenmantelfläche (56) des Gehäuses (12) ausgeführte hydraulische Verbindungen (30, 52) erfolgt.

9. Ventil (10) gemäß Anspruch 1, **dadurch gekennzeichnet, dass** ein Druckabbau im zweiten hydraulischen Raum (30) über den in einen zweiten Anschlag (70) gestellten Kolben (18) und den zentralen Kanal (76) bei in dem ersten hydraulischen Raum (28) geöffnetem Ventilsitz (72) erfolgt.

10. Ventil (10) gemäß Anspruch 1, **dadurch gekennzeichnet, dass** ein zentraler Kanal (76) im Kolben (18) über ein im ersten hydraulischen Raum (28) angeordnetes, federvorgespanntes Schließelement (74) geöffnet oder verschlossen wird.

## Claims

1. Valve (10), in the form of a pressure-maintaining valve in the return line part of a fuel injection system, having a housing (12) which has a tank port (14) and an injector port (16) and which comprises a first hydraulic chamber (28) and a second hydraulic chamber (30), **characterized in that**, within the housing (12), the first hydraulic chamber (28) and the second hydraulic chamber (30) are hydraulically separated from one another by precisely one spring-loaded piston (18), the shell surface of which comprises an annular groove (20) into which a sealing element (22) is inserted, wherein a load-exerting spring (34) extends through the second hydraulic chamber (30), and a piston spring (24) is accommodated in the first hydraulic chamber (28).

2. Valve (10) according to Claim 1, **characterized in that** the first hydraulic chamber (28) is charged with a return flow quantity (discharged quantity) from the fuel injectors via the injector port (16).

3. Valve (10) according to Claim 1, **characterized in that** the spring-loaded piston (18) has ducts (42) which can be opened or closed by means of a spring-loaded annular closing element (36).

4. Valve (10) according to Claim 1, **characterized in that** the spring-loaded piston (18) has a central duct (76) which can be opened or closed by means of a further spring-loaded closing element (74) arranged in the first hydraulic chamber (28).

5. Valve (10) according to Claim 1, **characterized in that**, in the event of a pressure level in the second hydraulic chamber (30) being exceeded, the piston (18) opens up a hydraulic connection (32) which issues into the first hydraulic chamber (28), and a pressure equalization takes place between the hydraulic chambers (28, 30).

6. Valve (10) according to Claim 5, **characterized in that**, in the event of a depletion of pressure in the second hydraulic chamber (30), the piston (18), with sealing element (22), closes off the hydraulic connection (32) and separates the first hydraulic chamber (28) from the second hydraulic chamber (30).

7. Valve (10) according to Claim 1, **characterized in that** a refilling of the second hydraulic chamber (30) takes place, via ducts (42) formed in the piston (18), counter to the action of a sealing element (36) which is acted on by a load-exerting spring (34).

8. Valve (10) according to Claim 1, **characterized in that** a refilling of the second hydraulic chamber (30) takes place via hydraulic connections (32, 50) formed on an inner shell surface (56) of the housing (12).

9. Valve (10) according to Claim 1, **characterized in that** a depletion of pressure in the second hydraulic chamber (30) takes place via the piston (18) set against a second stop (70), and via the central duct (76), when the valve seat (72) in the first hydraulic chamber (28) is open.

10. Valve (10) according to Claim 1, **characterized in that** a central duct (76) in the piston (18) is opened or closed by means of a spring-preloaded closing element (74) arranged in the first hydraulic chamber (28).

## Revendications

1. Soupape (10), réalisée sous forme de soupape de maintien de la pression dans la partie de retour d'un système d'injection de carburant, comprenant un boîtier (12), qui présente un raccord de réservoir (14) et un raccord d'injecteur (16) et comprend aussi un premier espace hydraulique (28) et un deuxième espace hydraulique (30), **caractérisée en ce qu'**à l'intérieur du boîtier (12), le premier espace hydraulique (28) et le deuxième espace hydraulique (30) sont séparés l'un de l'autre hydrauliquement par exactement un piston (18) sollicité par ressort, dont la surface d'enveloppe comprend une rainure annulaire (20), dans laquelle est incorporé un élément d'étanchéité (22), un ressort de tension (34) s'étendant à travers le deuxième espace hydraulique (30) et un ressort de piston (24) étant reçu dans le premier espace hydraulique (28).

2. Soupape (10) selon la revendication 1, **caractérisée en ce que** le premier espace hydraulique (28) est sollicité par le biais du raccord d'injecteur (16) avec une quantité de retour (quantité coupée) des injecteurs de carburant.

3. Soupape (10) selon la revendication 1, **caractérisée en ce que** le piston sollicité par ressort (18) présente des canaux (42) pouvant être ouverts ou fermés par le biais d'un élément de fermeture annulaire (36) sollicité par ressort.

4. Soupape (10) selon la revendication 1, **caractérisée en ce que** le piston sollicité par ressort (18) présente un canal central (76) qui peut être ouvert ou fermé au moyen d'un élément de fermeture supplémentaire (74) sollicité par ressort et disposé dans le premier espace hydraulique (28).

5. Soupape (10) selon la revendication 1, **caractérisée en ce que** dans le cas d'un dépassement d'un niveau de pression dans le deuxième espace hydraulique (30), le piston (18) libère une connexion hydraulique (32) qui débouche dans le premier espace hydraulique (28), et il se produit un équilibrage de la pression entre les espaces hydrauliques (28, 30).

6. Soupape (10) selon la revendication 5, **caractérisée en ce que** dans le cas d'une diminution de la pression dans le deuxième espace hydraulique (30), le piston (18) ferme la connexion hydraulique (32) avec un élément d'étanchéité (22) et sépare le premier espace hydraulique (28) du deuxième espace hydraulique (30).

7. Soupape (10) selon la revendication 1, **caractérisée en ce qu'**un remplissage en retour du deuxième espace hydraulique (30) a lieu par le biais de canaux (42) réalisés dans le piston (18) à l'encontre de l'effet d'un élément d'étanchéité (36) sollicité par un ressort de tension (34).

8. Soupape (10) selon la revendication 1, **caractérisée en ce qu'**un nouveau remplissage du deuxième espace hydraulique (30) a lieu par le biais de connexions hydrauliques (32, 50) réalisées sur une surface d'enveloppe intérieure (56) du boîtier (12).

9. Soupape (10) selon la revendication 1, **caractérisée en ce qu'**une diminution de la pression dans le deuxième espace hydraulique (30) a lieu par le biais du piston (18) disposé dans une deuxième butée (70) et du canal central (76) lorsque le siège de soupape (72) est ouvert dans le premier espace hydraulique (28).

10. Soupape (10) selon la revendication 1, **caractérisée en ce qu'**un canal central (76) dans le piston (18) est ouvert ou fermé par le biais d'un élément de fermeture (74) précontraint par ressort et disposé dans le premier espace hydraulique (28).
